# EUROPEAN PATENT SPECIFICATION

(11) **EP 0 814 939 B1**
(45) Date of publication and mention of the grant of the patent: **03.07.2002**
(21) Application number: 95929616.1
(22) Date of filing: 17.08.1995
(51) Int. Cl.: B23Q 16/00

(54) **SELF LOCATING DEVICE FOR FIXTURING VERY LARGE OBJECTS**
SELBSTPOSITIONIERENDE VORRICHTUNG ZUR FIXIERUNG VON SEHR GROSSEN OBJEKTEN
DISPOSITIF A GUIDAGE AUTOMATIQUE DESTINE AU SERRAGE DE TRES GRANDS OBJETS

(30) Priority: 17.03.1995 US 405679
(43) Date of publication of application: 07.01.1998
(73) Proprietor: THE BOEING COMPANY, Seattle, Washington 98124-2207 (US)
(72) Inventor: SENDOYKAS, John, C., Edmonds, WA 98026 (US)
(74) Representative: Land, Addick Adrianus Gosling
(86) International application number: US9510543
(87) International publication number: WO9629176

(56) References cited:
- EP-A- 0 330 905
- EP-A- 0 374 091
- EP-A- 0 459 544
- SU-A- 1 164 030
- US-A- 5 305 992

## Description

This invention relates to a self locating device suitable for fixturing very large objects such as fuselage sections of commercial aircraft and to a method for its use. More particularly the invention relates to a self locating device having cooperative nesting and locating units which keep the object secure during manufacture but facilitate rapid and rigid placement in the fixture. Such a self locating device, having the features of the pre-characterizing portion of claim 1, and a method for its use comprising the features of the pre-characterizing portion of claim 4 are known from EP-A-0 459 544.

### BACKGROUND

Many work pieces, small and large, must be secured in fixtures for further manufacturing operations. Fixturing large objects at multiple location points, particularly in a manner to provide easy access to the greatest possible area of a work piece, has been difficult.

For example, large commercial aircraft are manufactured in sections weighing several tons each which are later joined together for final assembly. Traditionally, fuselage sections have been suspended on heavy duty cranes and lowered onto multiple location points. The points comprise pins on the fixture which fit into slots in plates attached to the exterior of the fuselage along the water line. Dislocation during or after fixturing can result in damage to the work piece or stress on it during manufacture. The parts are also vulnerable to displacement during earthquakes.

In the past, one method of rigidly supporting work pieces, particularly very large ones, involves creation of a so called bed of nails. In such an arrangement, the work piece is supported from beneath at several locations on pegs having heights which match the work pieces contour. For example, U.S. Patent No. 4,121,817 to Provosky shows pins having conical contact points for supporting a work piece which is clamped into position. U.S. Patent No. 5,026,033 to Roxey shows a bed of nails having stanchions which are threaded into holes. The tips of the stanchions have means to tighten down the work piece. U.S. Patent No.5, 163,793 to Martinez shows a bed of nails for resting large parts where the top portion of each vertical support member is gimbaled to provide for full contact with contoured work pieces.

U.S. Patent No. 4,834,358 to Okolishin, et al shows a fixturing system featuring two or more locating pins which fit into parallel bores in the work piece. The patent shows moving the locating pins by allowing them to travel in holes drilled in a fixturing plate at required spacings.

None of the patents cited above satisfactorily meets the needs for accurately fixturing large work pieces at multiple location points.

The above-identified prior art document EP-A-0 459 544 discloses a self locating coupling member for connecting a tool carrier to a frame of a machine tool. This coupling member comprises a first block attached to the carrier and a second block attached to the frame of the machine tool. A blind bore of cylindrical chamber is formed in the first block, and extends into a concave hemispherical support surface. A piston and cylinder assembly is pivotely arranged in the blind bore. The second block includes a stepped bore into which is arranged a support piece having a convex hemispherical support surface. Both the second block and the support piece include a through bore, which is sized to receive the piston rod of the piston and cylinder assembly of the first block. The end of the piston rod is threaded, so that the first and second blocks may be connected by screwing a nut onto the threaded end of the piston rod. This is done by hand, after which pressurized fluid may be supplied to the piston and cylinder assemblies in order to withdraw the piston into the first block so as to tension the connection.

### BRIEF SUMMARY

The present invention has for its object to provide an improved self locating device that is suitable for fixturing very large objects. To this end the invention provides a self locating device for fixturing an object comprising a nesting unit and a cooperating locating unit,
- said nesting unit comprising a stationary nest having a bore therein, said bore tapering inwardly from the rim of the nest; a locating pin assembly beneath the taper of said bore, said assembly being connected to a pivot point on one side of the nest and including a locator pin extending upward through said bore, said pin serving to align the locating unit with the nesting unit before the object is finally positioned; and
- said locating unit comprising a lower section sized to seat in said tapered bore in said nest; and a bore into the bottom of the lower section sized to receive the locator pin,
characterized in that
- said bore in said nest and said lower section of said locating unit are each frustoconical;
- said locating pin assembly comprises a horizontal linkage shaft extending from said pivot point on one side of the nest to a slot on the other side of the nest, and a slider travelling on said shaft and carrying said locator pin; and
- said locating unit comprises an upper section having means to movably secure said locating unit to said object.

The locating pin assembly of the present invention allows the locating pin a large degree of freedom of movement, so that the locating unit and nesting unit may be prepositioned within broad margines, after which the object may be accurately positioned by seating the location unit in the nesting unit.

The invention also has for its object to provide an improved method of fixturing an object using one or more self locating devices. To this end the invention provides a method of fixturing an object using one or more self locating devices, wherein a said device comprises a nesting unit and a cooperating locating unit;
- said nesting unit comprising a nest having a bore therein, said bore tapering inwardly from the rim of the nest; a locating pin assembly beneath the taper of said bore, said assembly being connected to a pivot point on one side of the nest and including a locator pin extending upward through said bore,
- said locating unit comprising a lower section sized to seat in said tapered bore in said nest; and a bore into the bottom of the lower section sized to receive the locator pin,
wherein said object is fixtured by bringing said lower section of said locating unit and said tapered bore of said nesting unit into proximity to one another such that said locator pin protrudes slightly into the bore and thereafter allowing said locating unit to settle completely into said nesting unit,
characterized in that
- said bore in said nest and said lower section of said locating unit are each frustoconical;
- said locating unit comprises an upper section having a locating ball sized to fit withing a receptacle on a said large object; and
- said locating pin assembly comprises a horizontal linkage shaft extending from said pivot point on one side of the nest to a slot on the other side of the nest, and carrying said locator pin;
- said pin being spring loaded such that it can be depressed and moved withing the bore to assist in aligning said locating unit with said nesting unit before the object is finally positioned.

Our invention will be better understood in terms of the several figures and detailed description which follow.

### FIGURES

FIGURE 1 is the view of a self locating device in accordance with an embodiment of the invention suitable for fixturing an airplane section at one location point including a lower nesting unit and an upper locating unit before the units are in the nested position.

FIGURE 2 is similar to FIGURE 1 after the upper locating unit has settled in the nesting unit.

FIGURE 3 the self locating device of FIGURE 1 with the upper locating unit shown at several possible locations in hashed lines.

FIGURE 4 is a side sectional view of a self locating device shown in FIGURE 3.

FIGURE 5 shows a perspective view of the upper locating unit and selected features of the lower nesting unit and base including the rider plate and the horizontal linkage for the horizontal link pin.

FIGURE 6 is a perspective view of the locating unit with the locating ball locked into position on the locating unit with a lock pin prior to seating the locating unit.

FIGURE 7 is a top sectional view of the horizontal linkage mechanism in the base unit showing alternate positions of the mechanism in hashed lines.

FIGURE 8 is a perspective view of the self locating device after the work piece has been secured.

FIGURE 9 is a side view of the locating device after the work piece has been secured on a scaffold.

### DETAILED DESCRIPTION

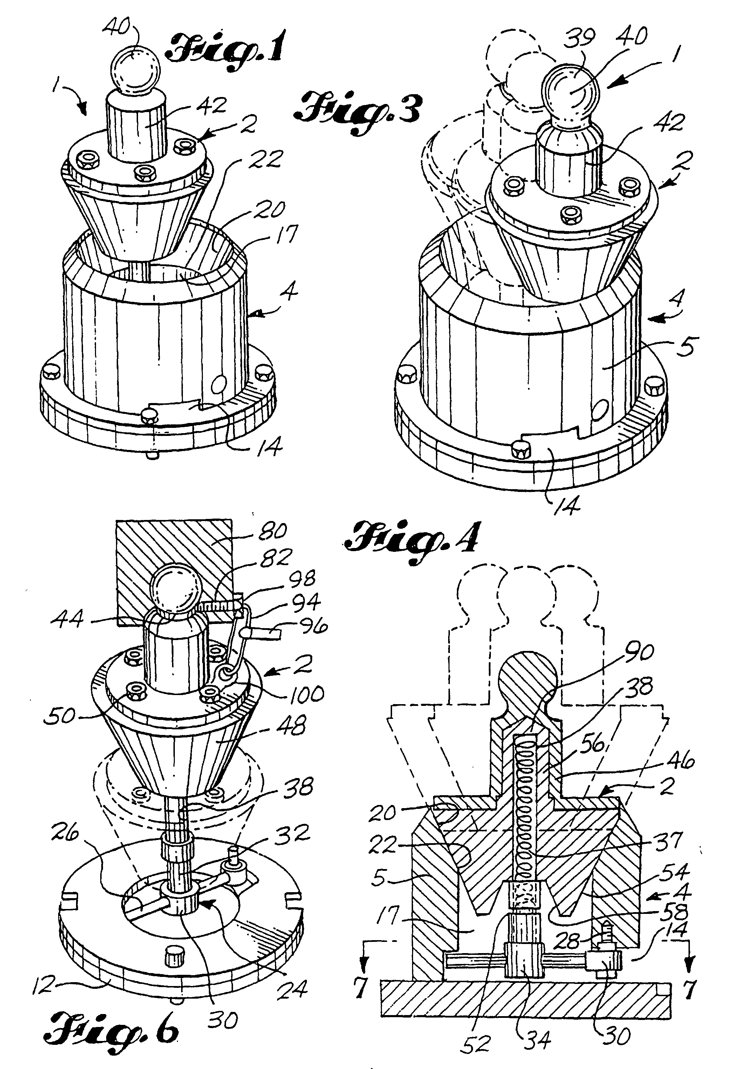

Referring to FIGURES 1 to 4, a self locating device 1 suitable for fixturing objects on a supporting framework is shown. Device 1 comprises upper locating unit 2 and lower nesting unit (nest) 4. Base plate 6 of nesting unit 4 is secured to attach plate 8 by bolts 10. Additionally, lateral movement of plate 8 can be allowed by loosening bolts 10 until locating unit 2 is seated in nesting unit 4 and then tightening bolts 10.

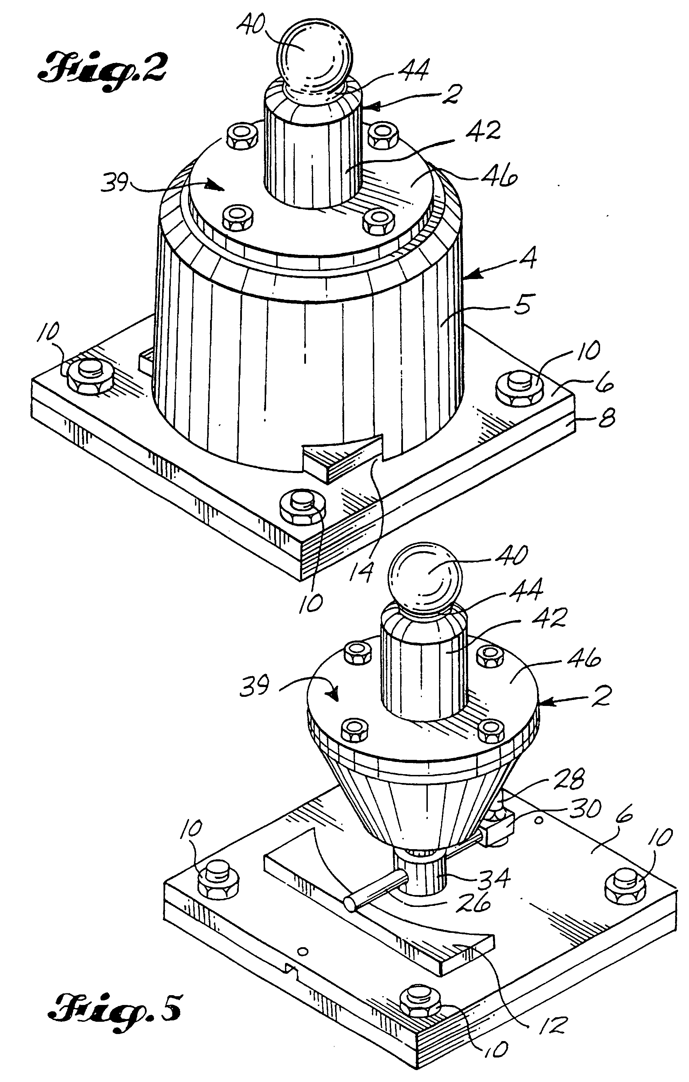

As best seen at FIGURE 4, nest 4 has a right circular cylindrical channel 17 therethrough. A frustoconical shaped bore extends form tapered nest rim 20 part way down channel 17 to point 22.

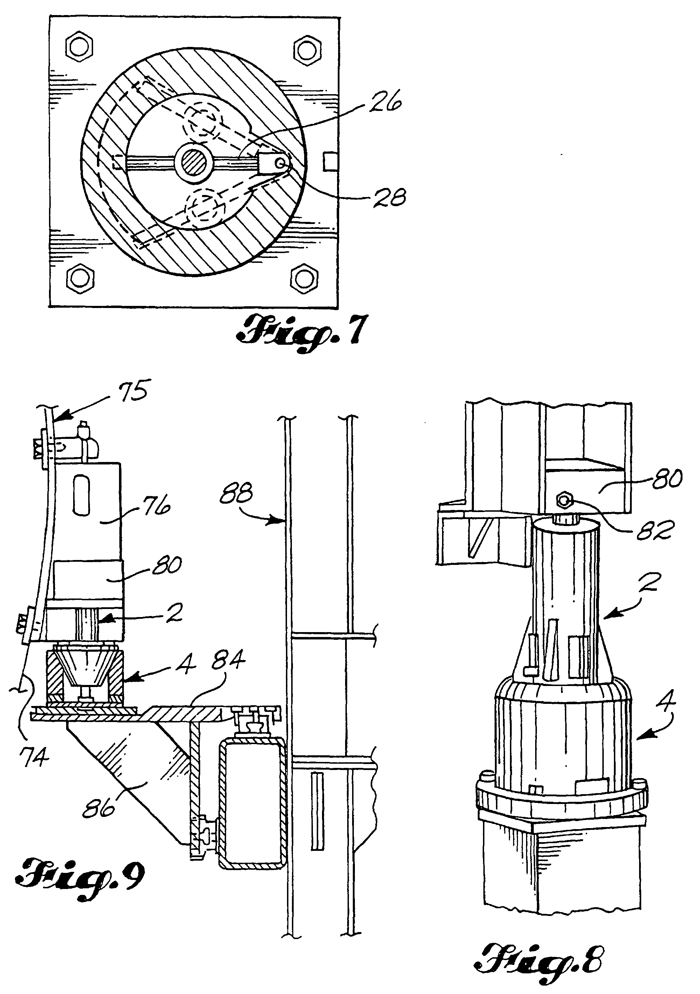

Rider plate 12 on attach plate 8 extends through notches 14 in the nest 4. Horizontal locating pin assembly 24 is mounted in nest 4. Assembly 24 comprises horizontal linkage shaft 26 biased on rider plate 12 in notch 14. Shaft 26 rotates on pivot pin 28 through linkage 30. Linkage pin 32 is carried on slider 34 which travels on shaft 26. Pin 32 supports pin cover 38. The freedom of movement of linkage pin 32 is best seen in FIGURE 7 which shows how assembly 24 moves when manipulated in upper locating unit 2 as shown at FIGURE 3.

Upper locating unit 2 comprises locating ball 40 on shank 42. Circumferential notch 44 is indented between ball 40 and shank 42. In the preferred embodiment shown, shank plate 46 and shank 42 are integral to one another. Referring particularly to FIGURE 4, frustoconical lower section 48 is secured to shank plate 46 by bolts 50. A cylindrical bore extends upwardly from bottom 54 of section 48 into shank 56. Bevel 58 from bottom 54 to bore facilitates location of pin cover 38 in bore before a workpiece is settled onto a nest 4.

Referring to FIGURE 6, upper locator unit is secured in a receptacle 80 in a locating block on or attached to a workpiece. Pin 82 has threads for screwing it into said block. Locating ball 40 is held in place by inserting pin 82 into circular notch 44. Movement of pin 82 is prevented by tie 94 which is threaded through hole 98 and eyelet 100 on shank plate 46.

To use the self locating devices described above, and with particular reference to FIGURES 8 and 9, body fitting jig 76 is attached to side 74 of a section of airplane fuselage. A locating block of jig 76 has receptacle 80 for a locating ball 40 and threaded hole 82 for receiving a pin to lock ball 40 in place.

Upper locating unit 2 is attached to fitting jig 76 by pushing ball 40 into receptacle 80 and inserting said pin into bevel 58. Unit 2 is somewhat free to swing on ball 40 which facilitates its alignment with nesting unit 4. Nesting unit 4 is fastened to platform 84 which is secured by crosspiece 86 to supporting scaffold 88.

Once upper unit 2 and lower unit 4 of each fixturing location point are secured, a fuselage section 75 is gently lowered from above the devices 1 such that top 90 of horizontal locator pin 32 is located very slightly above bottom of lower frustoconical section 48. Units 2 and 4 are then manipulated by hand at each fixturing location so that pin 32 is located within bore 52 in bottom cone 54. This can be accomplished by swinging upper unit 2 on ball 40 and/or compressing spring 37 and moving locator pin 32 around as illustrated in FIGURES 1, 3 and 7. Once each pin 32 is secured in a bore 52, section 75 is lowered slowly until each section 48 rests squarely in cooperating nest 5. The shape of section 48 and cooperating shape of nest 5 provide the "self locating" feature of the invention. Pin 82 prevents any vertical movement of the object with respect to the support, while the weight of the workpiece bearing down on nest 5 prevents lateral motion. Further motion of pin 82 can be prevented by stringing a wire 94 with security tag 96 through hole 98 in pin 82 and eyelet 100 on shank plate 46.

The invention has been disclosed in terms of the preferred embodiment, but other arrangements of the key elements also fall within its scope. For example, the relative positions of female nest section 5 and cooperative cone 48 could be reversed, i.e., the nest be located on the upper locating unit and the cone on the lower locating unit. In another alternative method, the scaffolding could be raised to meet a stationary workpiece rather the workpiece being lowered on a stationary scaffold.

While our invention has been described in terms of specific embodiments thereof, other forms may be readily adapted by one skilled in the art.

## Claims

1. A self locating device (1) for fixturing an object comprising a nesting unit (4) and a cooperating locating unit (2),
- said nesting unit (4) comprising a stationary nest having a bore (18) therein, said bore tapering inwardly from the rim (22) of the nest; a locating pin assembly (24) beneath the taper of said bore (18), said assembly (24) being connected to a pivot point (28) on one side of the nest and including a locator pin (32) extending upward through said bore (18), said pin (32) serving to align the locating unit (2) with the nesting unit (4) before the object is finally positioned; and
- said locating unit (2) comprising a lower section (48) sized to seat in said tapered bore (18) in said nest; and a bore (52) into the bottom (54) of the lower section (48) sized to receive the locator pin (32),
**characterized in that**
- said bore (18) in said nest and said lower section (48) of said locating unit (2) are each frustoconical;
- said locating pin assembly (24) comprises a horizontal linkage shaft (26) extending from said pivot point (28) on one side of the nest to a slot (14) on the other side of the nest, and a slider (34) travelling on said shaft (26) and carrying said locator pin (32); and
- said locating unit (2) comprises an upper section (42,46) having means (40,44) to movably secure said locating unit (2) to said object.

2. The self locating device (1) of claim 1, **characterized in that**
- said locator pin (32) is spring loaded such that it can be depressed and moved within the bore (52) of the locating unit (2) to assist in aligning said locating unit (2) with said nesting unit (4) before the work piece is finally positioned; and
- said means for movably securing said locating unit (2) to said object comprise a locating ball (40) sized to fit within a receptacle (80) in or attached to said object.

3. The self locating device of claim 2, **characterized by** means for securing the locating ball (40) while allowing freedom of movement of the locating unit (2) before it is secured in the nest.

4. A method of fixturing an object using one or more self locating devices (1), wherein a said device comprises a nesting unit (4) and a cooperating locating unit (2);
- said nesting unit (4) comprising a nest having a bore (18) therein, said bore tapering inwardly from the rim (22) of the nest; a locating pin assembly (24) beneath the taper of said bore (18), said assembly (24) being connected to a pivot point (28) on one side of the nest and including a locator pin (32) extending upward through said bore (18),
- said locating unit (2) comprising a lower section (48) sized to seat in said tapered bore (18) in said nest; and a bore (52) into the bottom (54) of the lower section (48) sized to receive the locator pin (32),
wherein said object is fixtured by bringing said lower section (48) of said locating unit (2) and said tapered bore (18) of said nesting unit (4) into proximity to one another such that said locator pin (32) protrudes slightly into the bore (18) and thereafter allowing said locating unit (2) to settle completely into said nesting unit (4),
**characterized in that**
- said bore (18) in said nest and said lower section (48) of said locating unit (2) are each frustoconical;
- said locating unit (2) comprises an upper section (42,46) having a locating ball (40) sized to fit withing a receptacle (80) on a said large object; and
- said locating pin assembly (24) comprises a horizontal linkage shaft (26) extending from said pivot point (28) on one side of the nest to a slot (14) on the other side of the nest, and carrying said locator pin (32);
- said pin (32) being spring loaded such that it can be depressed and moved withing the bore (18) to assist in aligning said locating unit (2) with said nesting unit (4) before the object is finally positioned.

5. The method of claim 4, **characterized in that** said locating pin assembly (24) includes a slider (34) travelling on said horizontal linkage shaft (26) and carrying said locator pin (32).

6. The method of claim 4 or 5, **characterized in that** the object is an aircraft section and **in that** a plurality of said self locating devices (1) are used.

## Patentansprüche

1. Selbstlokalisierende Einrichtung (1) zum Befestigen eines Objekts, umfassend eine Unterbringungs- bzw. Ineinandersteckeinheit (4) und eine zusammenwirkende Lokalisierungseinheit (2),
- wobei die Unterbringungs- bzw. Ineinandersteckeinheit (4) folgendes umfasst: eine stationäre Aufnahme bzw. ein stationäres Nest, die bzw. das eine Bohrung (18) darin hat, wobei sich die Bohrung von dem Rand (22) der Aufnahme bzw. des Nests nach einwärts zu verjüngt; einen Lokalisierungsstiftbzw. -bolzenaufbau (24) unterhalb der Verjüngung der Bohrung (18), wobei der Aufbau (24) mit einem Drehpunkt (28) auf einer Seite der Aufnahme bzw. des Nests verbunden ist und einen Lokalisierungsstift bzw. -bolzen (32) umfasst, der sich durch die Bohrung (18) nach aufwärts erstreckt, wobei der genannte Stift bzw. Bolzen (32) dazu dient, die Lokalisierungseinheit (2) mit der Unterbringungs- bzw. Ineinandersteckeinheit (4) abzufluchten, bevor das Objekt schließlich bzw. endgültig positioniert wird bzw. ist; und
- wobei die Lokalisierungseinheit (2) folgendes umfasst:
einen unteren Abschnitt (48), der so dimensioniert ist, dass er in der sich verjüngenden Bohrung (18) in der Aufnahme bzw. dem Nest sitzt bzw. eingepasst ist; und eine Bohrung (52) in dem Boden (54) des unteren Abschnitts (48), die so dimensioniert ist, dass sie den Lokalisierungsstift bzw. -bolzen (32) aufnimmt,
**dadurch gekennzeichnet, dass**
- die Bohrung (18) in der Aufnahme bzw. dem Nest und der untere Abschnitt (48) der Lokalisierungseinheit (2) je kegelstumpfförmig ist;
- der Lokalisierungsstift- bzw. -bolzenaufbau (24) einen horizontalen Verbindungsschaft (26), der sich von dem Drehpunkt (28) auf einer Seite der Aufnahme bzw. des Nests zu einem Schlitz (14) auf der anderen Seite der Aufnahme bzw. des Nests erstreckt, und einen Schieber (34), der auf dem Schaft (26) wandert und den Lokalisierungsstift bzw. -bolzen (32) trägt, umfasst; und
- die Lokalisierungseinheit (2) einen oberen Abschnitt (42, 46), der Mittel (40, 44) zum bewegbaren Befestigen der Lokalisierungseinheit (2) an dem Objekt hat, umfasst.

2. Selbstlokalisierende Einrichtung (1) des Anspruchs 1,
**dadurch gekennzeichnet, dass**
- der Lokalisierungsstift bzw. -bolzen (32) derart federbelastet ist, dass er niedergedrückt und innerhalb der Bohrung (52) der Lokalisierungseinheit (2) bewegt werden kann, um die Abfluchtung der Lokalisierungseinheit (2) mit der Unterbringungs- bzw. Ineinandersteckeinheit (4), bevor das Werkstück schließlich bzw. endgültig positioniert wird bzw. ist, zu unterstützen; und
- die Mittel zum bewegbaren Befestigen der Lokalisierungseinheit (2) an dem Objekt eine Lokalisierungskugel (40) umfassen, die so dimensioniert ist, dass sie in eine Aufnahme bzw. einen Sitz bzw. einen Behälter (80) passt, die bzw. der in dem Objekt ist oder an dem Objekt angebracht ist.

3. Selbstlokalisierende Einrichtung (1) des Anspruchs 2, **gekennzeichnet durch** Mittel zum Befestigen der Lokalisierungskugel (40), während sie eine Freiheit der Bewegung der Lokalisierungseinheit (2), bevor sie in der Aufnahme bzw. dem Nest befestigt wird bzw. ist, ermöglichen.

4. Verfahren des Befestigens eines Objekts unter Verwendung von einer oder mehreren selbstlokalisierenden Einrichtungen (1), wobei eine genannte Einrichtung eine Unterbringungsbzw. Ineinandersteckeinheit (4) und eine zusammenwirkende Lokalisierungseinheit (2) umfasst;
- wobei die Unterbringungs- bzw. Ineinandersteckeinheit (4) folgendes umfasst: eine Aufnahme bzw. ein Nest, die bzw. das eine Bohrung (18) darin hat, wobei sich die Bohrung von dem Rand (22) der Aufnahme bzw. des Nests aus nach einwärts' verjüngt; einen Lokalisierungsstift- bzw. -bolzenaufbau (24) unterhalb der Verjüngung der Bohrung (18), wobei der genannte Aufbau (24) mit einem Drehpunkt (28) auf einer Seite der Aufnahme bzw. des Nests verbunden ist und einen Lokalisierungsstift bzw. -bolzen (32) umfasst, der sich durch die Bohrung (18) nach aufwärts erstreckt,
- wobei die Lokalisierungseinheit (2) folgendes umfasst: einen unteren Abschnitt (48), der so dimensioniert ist, dass er in der sich verjüngenden Bohrung (18) in der Aufnahme bzw. dem Nest sitzt bzw. eingepasst ist; und eine Bohrung (52) in dem Boden (54) des unteren Abschnitts (48), die so dimensioniert ist, dass sie den Lokalisierungsstift bzw. -bolzen (32) aufnimmt,
worin das Objekt dadurch befestigt wird, dass man den unteren Abschnitt (48) der Lokalisierungseinheit (2) und die sich verjüngende Bohrung (18) der Unterbringungs- bzw. Ineinandersteckeinheit (4) derart in die Nähe bzw. in geringen Abstand zueinander bringt, dass der Lokalisierungsstift bzw. -bolzen (32) ein wenig in die Bohrung (18) vorsteht, und man es danach der Lokalisierungseinheit (2) ermöglicht, sich vollständig in die Unterbringungs- bzw. Ineinandersteckeinheit (4) abzusenken bzw. festzusetzen,
**dadurch gekennzeichnet, dass**
- die Bohrung (18) in der Aufnahme bzw. dem Nest und der untere Abschnitt (48) der Lokalisierungseinheit (2) je kegelstumpfförmig ist;
- die Lokalisierungseinheit (2) folgendes umfasst: einen oberen Abschnitt (42, 46), der eine Lokalisierungskugel (40) hat, die so dimensioniert ist, dass sie in einen Sitz bzw. eine Aufnahme bzw. einen Behälter (80) auf dem großen Objekt passt; und
- der Lokalisierungsstift- bzw. -bolzenaufbau (24) einen horizontalen Verbindungsschaft (26) umfasst, der sich von dem Drehpunkt (28) auf einer Seite der Aufnahme bzw. des Nests zu einem Schlitz (14) auf der anderen Seite der Aufnahme bzw. des Nests erstreckt und den Lokalisierungsstift bzw. -bolzen (32) trägt;
- der Stift bzw. der Bolzen (32) derart federbelastet ist, dass er niedergedrückt und innerhalb der Bohrung (18) zur Unterstützung ei der Abfluchtung der Lokalisierungseinheit (2) mit der Unterbringungs- bzw. Ineinandersteckeinheit (4), bevor das Objekt schließlich bzw. endgültig positioniert wird bzw. ist, bewegt werden kann.

5. Verfahren des Anspruchs 4, **dadurch gekennzeichnet, dass** der Lokalisierungsstift- bzw. -bolzenaufbau (24) einen Schieber (34) umfasst, der auf dem horizontalen Verbindungsschaft (26) läuft und den Lokalisierungsstift bzw. -bolzen (32) trägt.

6. Verfahren nach Anspruch 4 oder 5, **dadurch gekennzeichnet, dass** das Objekt ein Flugzeugabschnitt ist, und dass eine Mehrzahl der genannten selbstlokalisierenden Einrichtungen (1) benutzt wird.

## Revendications

1. Dispositif (1) de localisation pour fixer à demeure un objet comprenant une unité d'emboîtement (4) et une unité de localisation coopérant (2),
- ladite unité d'emboîtement (4) comprenant un emboîtement fixe possédant un alésage (18), ledit alésage allant en se réduisant vers l'intérieur à partir du bord (22) de l'emboîtement; un ensemble de broche de repérage (24) en dessous du cône dudit alésage (18), ledit ensemble (24) étant relié à un point de pivot (28) sur un côté de l'emboîtement et comprenant une broche de reprérage (32) s'étendant vers le haut à travers ledit alésage (18), ladite broche de repérage (32) servant à aligner l'unité de localisation (2) avec l'unité d'emboîtement (4) avant que l'objet soit positionné de façon définitive; et
- ladite unité de localisation (2) comprenant une section inférieure (48) dimensionnée de façon à se caler dans ledit alésage conique (18) dans ledit emboîtement; et un alésage (52) dans ladite partie inférieure (54) de la section inférieure (48) dimensionné de façon à recevoir la broche de reprérage (32),
**caractérisé en ce que**
- ledit alésage (18) dans ledit emboîtement et ladite section inférieure (48) de ladite unité de localisation (2) sont chacun en tronc de cône;
- ledit ensemble de broche de localisation (24) comprend un arbre horizontal de liaison (26) s'étendant à partir dudit point de pivot (28) d'un côté de l'emboîtement jusqu'à une fente (14) de l'autre côté de l'emboîtement, et un coulisseau (34) se déplaçant sur ledit arbre (26) et supportant ladite broche de repérage (32); et
- ladite unité de localisation (2) comprend une section supérieure (42, 46) possédant un moyen (40, 44) pour fixer de façon mobile ladite unité de localisation (2) audit objet.

2. Dispositif de localisation automatique (1) selon la revendication 1, **caractérisé en ce que**
- ladite broche de repérage (32) est poussée élastiquement de telle facon qu'elle puisse être enfoncée et déplacée à l'intérieur de l'alésage (52) de l'unité de localisation (2) pour aider à aligner l'unité de localisation (2) à l'intérieur de ladite unité d'emboîtement (4) avant que la pièce à usiner soit positionnée de façon définitive; et
- ledit moven servant à fixer de facon mobile ladite unité de localisation (2) audit objet comprend une bille de localisation (40) dimensionnée de facon à entrer à l'intérieur d'un réceptacle (80) dans ou fixé audit objet.

3. Dispositif de localisation automatique selon la revendication 2, **caractérisé par** un moven pour fixer la bille de localisation (40) tout en permettant une liberté de mouvement de l'unité de localisation (2) avant qu'elle soit fixée dans l'emboîtement.

4. Procédé pour fixer à demeure un objet en utilisant un ou plusieurs dispositifs de localisant automatique (I), dans lequel ledit dispositif comprend une unité d'emboîtement (4) et une unité de localisation coopérant (2);
- ladite unité d'emboîtement (4) comprenant un emboîtement possédant en lui un alésage (18), ledit alésage allant en se réduisant vers l'intérieur à partir du bord (22) de l'emboîtement: un ensemble de broche de repérage (24) en dessous du cône dudit alésage (18), ledit ensemble (24) étant relié à un point de pivot (28) sur un côté de l'emboîtement et comprenant une broche de repérage (32) s'étendant vers le haut à travers ledit alésage (18).
- ladite unité de localisation (2) comprenant une section inférieure (48) dimensionnée de facon à se caler dans ledit alésage conique (18) dans ledit emboîtement: et un alésage (52) dans ladite partie inférieure (54) de la section inférieure (48) dimensionné de facon à recevoir la broche de repérage (32).
dans lequel ledit objet est fixé à demeure en amenant ladite section inférieure (48) de ladite unité de localisation (2) et ledit alésage conique (18) de ladite unité d'emboîtement (4) à proximité l'un de l'autre de telle façon que ladite broche de repérage (32) dépasse légèrement dans l'alésage (18) et en permettant ensuite à ladite unité de localisation (2) de se stabiliser complètement dans ladite unité d'emboîtement (4), **caractérisé en ce que**
- ledit alésage (18) dans ledit emboîtement et ladite section inférieure (48) de ladite unité de localisation (2) sont chacun en tronc de cône:
- ladite unité de localisation (2) comprend une section supérieure (42.46) possédant une bille de localisation (40) dimensionnée de facon à entrer à l'intérieur d'un réceptacle (80) sur ledit grand objet; et
- ledit ensemble de broche de repérage (24) comprend un arbre horizontal de liaison (26) s'étendant à partir dudit point de pivot (28) d'un côté de l'emboîtement jusqu'à une fente (14) de l'autre côté de l'emboîtement, et portant ladite broche de repérage (32);
- ladite broche (32) étant poussée élastiquement de telle facon qu'elle puisse être enfoncée et déplacée à l'intérieur de l'alésage (18) pour aider à aligner l'unité de localisation (2) avec ladite unité d'emboîtement (4) avant que l'objet soit définitivement positionné.

5. Procédé selon la revendication 4, **caractérisée en ce que** ledit ensemble de broche de localisation (24) comprend un coulisseau (34) se déplaçant sur ledit arbre horizontal de liaison (26) et portant ladite broche de repérage (32).

6. Procédé selon la revendication 4 ou 5, **caractérisée en ce que** l'objet est une section d'avion et **en ce qu'**on utilise une pluralité desdits dispositifs de localisation automatique (1).
